# EUROPEAN PATENT SPECIFICATION

(11) **EP 2 531 565 B1**
(45) Date of publication and mention of the grant of the patent: **03.01.2018**
(21) Application number: 11740397.2
(22) Date of filing: 04.02.2011
(51) Int. Cl.: C09D 5/02, C09K 3/00, C08L 27/06, C09D 7/06, C08K 5/1535

(54) **DIANHYDROHEXITOL DIESTER COALESCING AGENT**
DIANHYDROHEXITOLDIESTER-KOALESZENZMITTEL
AGENT COALESCENT DIESTER DE DIANHYDROHEXITOL

(30) Priority: 04.02.2010 US 301407 P
(43) Date of publication of application: 12.12.2012
(73) Proprietor: Elementis Specialties, Inc., Hightstown, NJ 08520 (US)
(72) Inventor: LYNCH, Thomas, Chesterfield, NJ 08151 (US); MARDIS, Wilbur, Holland, PA 18966 (US)
(74) Representative: Vossius & Partner Patentanwälte Rechtsanwälte mbB
(86) International application number: PCT/US2011/023694
(87) International publication number: WO 2011/097443

(56) References cited:
- WO-A1-2006/103338
- GB-A- 613 444
- US-A1- 2007 088 099
- US-A1- 2007 282 042
- US-A1- 2008 191 164
- US-A1- 2009 118 397
- US-A1- 2009 118 397
- US-A1- 2010 104 884
- US-A1- 20090 301 348
- US-B1- 6 395 810

## Description

### BACKGROUND

Aqueous dispersions or emulsions of water-insoluble polymers for use as coatings including paints, sealants, caulks, adhesives or other coatings are well-known, widely-used articles of commerce. The effectiveness of such film forming compositions in forming a film after the polymer dispersion or emulsion has been deposited upon a surface depends upon the minimum film formation temperature ("MFFT") of the dispersed or emulsified polymer and the temperature at which the film is allowed to form. The film forming composition must be applied to a surface at a temperature higher than the polymer's MFFT, otherwise a brittle, cracked film results.

Coatings with good hardness may be prepared from aqueous polymer particle dispersions containing hard polymers, i.e., polymers with MFFT significantly above ambient temperatures. However, coating compositions containing these hard polymers typically include additives such as volatile coalescents to allow the hard polymers to flow and form a film at ambient temperature. After film formation, such volatile coalescents evaporate, leaving a dry, hard polymer film. In the absence of such additives, however, a good level of hardness and polymer flow (and thus acceptable film forming) are mutually exclusive properties.

Coalescent aids have been used in such film forming polymers to reduce the polymers' MFFT which softens or plasticizes the polymer phase and facilitates the formation of a continuous film with optimum film properties once the water has evaporated. Coalescent aids are defined by The Paint/Coatings Dictionary, published by the Federation of Societies for Coating Technology (1978), as solvents with a high boiling point which, when added to a coating, aid in film formation via temporary plasticization of the film. In contrast, plasticizers for plastics are understood in the art to provide permanent plasticization. Because the mechanisms between traditional coalescent aids and plasticizers differ, one of skill in the art would predict that a plasticizer would continue indefinitely to plasticize the film, impairing its performance such as film gloss and hardness.
US 2009/118397 A1 discloses an aqueous coating composition comprising one or more film-forming latex polymers, and a reactive surfactant comprising one or more polyglycerol derivatives chosen from a polyglycerol ester and a polyglycerol ether of one or more unsaturated fatty acids.
US 2007/282042 A1 relates to a plasticizer for reducing the glass transition temperature of polymeric materials, comprising an ester of an anhydrosugar alcohol, wherein the anhydrosugar alcohol is preferably selected from the group consisting of isosorbide, isomannide and isoiditide.

In addition to enhancing film formation, a coalescent aid also promotes subsequent improvements in film properties. For example, a coalescent aid improves surface wetting which, in turn, improves the adhesion of the film to the substrate. Films prepared with coalescent aids are generally more durable and less prone to mud cracking. Without the coalescent aid, the films may crack and fail to adhere to the substrate surface when dry.

The present disclosure addresses the need for a low VOC or no VOC film forming compositions with the use of a film promoter composition which lowers the MFFT of the film-forming composition and forms a hard, glossy film.

### SUMMARY

According to the the present invention, a film-forming composition includes a water-based film-forming polymer and a diester(s) of one or more dianhydrohexitols, wherein said dianhydrohexitol diester has a volatile organic content of less than 20 wt. % and the dianhydrohexitol diester is an isosorbide diester selected from isosorbide diisovalerate, isosorbide divalerate, isosorbide dihexanoate, isosorbide dipropionate, and/or isosorbide diisobutyrate. In some embodiments, the dianhydrohexitol diester includes isosorbide diisovalerate, isosorbide divalerate, and isosorbide dihexanoate. In another embodiment, the dianhydrohexitol diester is isosorbide dihexanoate.

In certain embodiments, the film-forming composition includes an additive such as wetting aids, dispersants, thickeners, defoaming agents, algicides, ultra-violet inhibitors, flow agents, leveling agents, rheology modifiers, freeze thaw stabilizing agents, pH modifiers, flash rust inhibitors, biocides, pigments, fillers and dyes.

In some embodiments, the film-forming composition contains at least about 20 wt. % water. In certain embodiments, the film-forming composition contains at least about 20 wt. % water, at least about 10 wt. % water-based film-forming polymer, and the weight of the dianhydrohexitol diester is about 0.1% to about 50% of the weight of the water-based film-forming polymer. In some embodiments, the weight of the dianhydrohexitol diester is about 0.1% to about 50% of the weight of the water-based film-forming polymer. In other embodiments, the weight of the dianhydrohexitol diester is about 1 % to about 20 % of the weight of the water-based film-forming polymer.

In some embodiments, the water-based film-forming polymer includes an acrylic resin, a vinyl acrylic resin, a styrene acrylic resin, a vinyl acetate ethylene resin, alkyd resin, ethylene vinyl acrylate resin and combinations thereof. In certain embodiments, the water-based film-forming polymer includes a blend of acrylic resin and/or vinyl acrylic resin and/or styrene acrylic resin and/or a vinyl acetate ethylene resin, and/or alkyd resin and/or ethylene vinyl acrylate resin.

### DETAILED DESCRIPTION

The film-forming compositions of the present invention generally contain a continuous aqueous phase and water-based film-forming polymer phase. In general, the film-forming compositions may be formulated with various additives to function as a paint, sealant, caulk, adhesive or other coating. Thus, these film-forming compositions may have a wide range of viscosities, e.g., from about 50 to about 10,000 centipoise; paints, sealants and similar coatings typically have a viscosity from about 50 to about 10,000 centipoise, caulks typically have a viscosity from about 5,000 to about 1,000,000 centipoise, and adhesives typically have a viscosity from about 50 to about 50,000 centipoise. In addition, adhesives are formulated for cohesive strength as well as good contact with the substrate upon which the film-forming composition is deposited. As used herein, a water-based film-forming polymer means a film-forming polymer which is dispersed or emulsified in water. For the purposes of this application, about means ± 5 %.

In some embodiments, the continuous aqueous phase comprises at least about 10 wt. % water with the amount of water depending upon the application. For example, in some embodiments, paints, sealants and similar coating compositions have at least about 10 wt. % water and may contain about 20 wt. % to about 80 wt. % water with differing amounts being used for textured, high gloss, semi-gloss, flat, etc. coatings. In some embodiments, caulks have at least about 10 wt. % water and may contain about 10 wt. % to about 50 wt. % water with differing amounts being used for different caulk applications. In certain embodiments, adhesives range from about 10 wt. % to about 80 wt. % water and may contain about 40 wt. % to about 60 wt. % water with differing amounts being used for different adhesive applications.

In some embodiments, the continuous aqueous phase may optionally include one or more water-soluble volatile organic solvents, i.e., substituted hydrocarbon solvents. For the purposes of this application, volatile organic solvents shall be defined as those that have a boiling point of about 250° C or less, or a boiling range beginning at about 250° C or less. For example, in some embodiments modest amounts of ethylene glycol (e.g., 3-5 wt. %; b.p. 196-198° C) or another glycol may be included for freeze-thaw protection. In some embodiments, the proportion of water-soluble volatile organic solvents is minimized; that is, the continuous aqueous phase may contain less than about 20 wt. % volatile organic solvent, less than about 10 wt. % volatile organic solvent, less than about 5 wt. % volatile organic solvent, less than about 1 wt. % volatile organic solvent based upon the weight of the continuous aqueous phase and exclusive of any amount which may be present in a micelle or other dispersed phase or material.

In other embodiments, the volatile organic solvent content in the continuous aqueous phase is negligible (less than about 0.1 wt. %) to meet increasingly stringent environmental regulations.

In some embodiments, the polymeric phase comprises a water-based film-forming polymer and, optionally, one or more additives. In certain embodiments, the polymeric phase, including the water-based film-forming polymer, constitutes no more than about 90 wt. % of the film forming composition with the amount of the polymeric phase depending upon the application. In some embodiments, paints, sealants and similar coating compositions have no more than about 90 wt. % polymeric phase and may contain about 20 wt. % to about 80 wt. % polymeric phase with differing amounts being used for textured, high gloss, semi-gloss, flat, etc. coatings. In some embodiments, caulks have no more than about 90 wt. % polymeric phase and may contain about 75 wt. % to about 90 wt. % polymeric phase with differing amounts being used for different caulk applications. In some embodiments, adhesives range from about 20 wt. % to about 90 wt. % dispersed phase and may contain about 40 wt. % to about 60 wt. % polymeric phase with differing amounts being used for different adhesive applications.

In some embodiments, the film-forming polymer is insoluble in the aqueous phase but is otherwise suitable for use in film-forming compositions. The film-forming composition may include: at least about 10 wt. %, at least about 15 wt. %, at least about 20 wt. % of a film-forming polymer; and at least about 30 wt. % of a film-forming polymer.

According to some embodiments of the present invention, suitable water-based film-forming polymers are generally of high molecular weight (e.g, greater than about 60,000 Daltons for a typical film-forming latex resin).

In some embodiments, the film forming polymers include thermoplastic polymers; in these compositions, films may be formed by evaporation of the water. In other embodiments, the film forming polymers include crosslinkable formulations; these formulations may include crosslinking agents and water-based film-forming polymers or self-crosslinking water-based film-forming polymers.

In some embodiments the film-forming polymers may be either of the addition type, in particular a polymer or copolymer of one or more α,β-ethylenically unsaturated monomers, or of the condensation type. In some embodiments, the water-based film-forming polymers of the addition type may include the polymerization and copolymerization products of the following monomers: styrene, ethylene, vinyl acetate, vinyl toluene, vinyl chloride, vinylidene chloride, butadiene, vinyl hydrocarbons, acrylonitrile, acrylic acid and esters thereof (hereinafter "acrylates"), and methacrylic acid and esters thereof (hereinafter "methacrylates"). In other embodiments, condensation type water-based film-forming polymers may include epoxy, urethane, hydrocarbon, silicone, nitrocellulose, polyester, polyamide and alkyd polymers. In other embodiments, water-based film-forming polymers include the polymerizates or copolymerizates of one or more of the following: acrylates such as ethyl acrylate, butyl acrylate, 2-ethylhexyl acrylate, as well as other acrylates, methacrylates, styrene and vinyl acetate. In some embodiments, the water-based film-forming polymer comprises a latex. In other embodiments, water-based film-forming polymers include an acrylic resin, a vinyl acrylic resin, a styrene acrylic resin, a vinyl acetate ethylene resin, alkyd resin, ethylene vinyl acrylate resin and combinations thereof.

The water based film-forming polymer has a characteristic MFFT of: between 15° C and 60° C; between 15° C and 50° C; between 15° C and 40° C; between 15° C and 35° C; between 15° C and 30° C; between 15° C and 25° C; or between 15° C and 20° C.

In some embodiments, the film-forming polymers are dispersed as very small particles and are more readily coalesced than film-forming polymers dispersed as larger particles. Accordingly, in some embodiments, dispersed polymers have a particle size of about 3 micrometers or less. For example, for latex resins, in some embodiments approximately 90 wt. % of the latex particles will have a size less than about 0.2 micrometers.

In some embodiments, the film promoter composition of this invention is used in latex, also known as emulsion, systems. In some embodiments, these film promoter compositions may also find application in other systems such as those based on but not limited to alkyds, epoxies, nitrocellulose, and urethanes.

In some embodiments, the amount of film promoter composition needed to assist in film formation depends on the viscosity of the film-forming composition, the temperature at which the composition is being applied, the glass transition temperature of the film-former, and the minimum film formation temperature of the film-former. In certain embodiments, the amount of film promoter composition will be proportional to the amount and type of resin used with ratios in the range of about 0.1 wt. % to about 50 wt. % (based upon the weight of the dry resin), about 0.1 wt. % to about 40 wt. % (based upon the weight of the dry resin), about 0.1 wt. % to about 25 wt. % (based upon the weight of the dry resin), about 0.1 wt. % to about 15 wt. % (based upon the weight of the dry resin), about 0.1 wt. % to about 10 wt. % (based upon the weight of the dry resin), or in the 1 wt. % to about 4 wt. % range (based upon the weight of the dry resin).

The film promoter composition may be in the continuous phase, in the dispersed phase, or partitioned between the two. In some embodiments, the predominant proportion of the film promoter composition is thus dissolved in the dispersed water-based film-forming polymer. In certain embodiments, at least 80 wt. %, at least 90 wt. %, at least 95 wt. %, or at least 99 wt. % of the film promoter composition is dissolved in the dispersed water-based film-forming polymer. Depending upon the type and amount of surfactants included in the film-forming composition, a fraction of the film promoter composition may additionally be emulsified in the continuous aqueous phase and found in micelles along with surfactant.

In certain embodiments, at least 80 wt. %, at least 90 wt. %, at least 95 wt. %, or at least 99 wt. % of the film promoter composition is present in the continuous phase.

The film-forming composition of the present invention may also contain various conventional additives which may be in the dispersed and/or continuous phases. Such additives may include but are not limited to thickening agents such as hydroxyethylcellulose sold by Aqualon under the trade designation Natrasol® 250 and thickeners sold under the trade designation RHEOLATE® associative thickeners by Elementis Specialties, pH modifiers such as ammonium hydroxide and N,N-dimethyl ethanolamine, defoaming agents such as mineral oil or silicone oils, wetting agents such as a nonionic surfactant sold by AKZO under the trade designation Interwet® 43 and a nonionic surfactant sold by Dow Chemical under the trade designation Triton® X-100, algicides such as organotin compounds and tetrachloroisophthalonitrile, fungicides such as tributyl tin oxide, and 3-iodo-2-propynyl butyl carbamate, dispersants such as lecithin and an anionic dispersant sold under the trade designation Busperse® 39 by Buckman, ultraviolet inhibitors such as a benztriazol UV inhibitor sold under the trade designation Tinuvin® 328 by Ciba-Geigy and a hindered amine UV inhibitor sold under the trade designation by Tinuvin® 123 by Ciba-Geigy, flow and leveling agents such as a polyacrylate sold under the trade designation Byk® 354 by Byk-Chemie and a polysiloxane copolymer sold under the trade designation Byk ®310 by Byk-Chemie, flash rust inhibitors such as an inhibitor sold under the trade designation Raybo® 63 by Raybo or a barium metaborate rust inhibitor sold under the trade designation Busan ®11M1 by Buckman, and freeze/thaw inhibitors such as ethylene glycol. Additional additives may include driers such as cobalt driers carboxylate salts (0.0 to 0.15 wt. % Co based on the film-forming promoter) and manganese driers carboxylate salts (0.0 to 0.15 wt. % based on the film-forming promoter), accelerators such as 1,10-phenanthroline (0 to 0.2% wt. % based on the film-forming promoter) and 2,2-bipyridine (0 to 0.2% wt. % based on the film-forming promoter), and anti-skinning agents such as butanone oxime (0 1 1b/100 gal formulation). When present and depending upon the application for the film-forming composition, in some embodiments these additives will not constitute more than about 10 wt. % of the film-forming composition and may constitute about 3 wt. % to about 10 wt. % of the film-forming composition.

In some embodiments, the film forming compositions of this invention will contain pigments or dyes (ink application) to impart hiding and color to the applied film, and/or fillers such as talc, calcium carbonate, kaolin clays, etc.

The film-forming composition may be formed by conventional methods used to prepare paints or adhesives, except that the dianhydrohexitol diester of the present invention is substituted for a conventional coalescent aid. The resulting film-forming composition may easily be applied conventionally using a brush, roller, air or airless spray or like means and requires no unusual methods of drying to form the desired film. Thus, films formed from the composition of the present invention may be dried under ambient conditions or baked at elevated temperature. Furthermore, the film-forming composition may be applied to a variety of materials.

### Dianhydrohexitol Diesters

Accordingly, the present invention relates to film promoter compositions including dianhydrohexitol diesters, which have a volatile organic content ("VOC") of: less than 20 wt. %; less than 10 wt. %; ranging from 2 wt. % to 10 wt. %; ranging from 2 wt. % to 5 wt. %. The VOC may be determined according to ASTM D3960.

The dianhydrohexitol diester includes isosorbide dipropionate, isosorbide diisobutyrate, isosorbide diisovalerate, isosorbide divalerate and isosorbide dihexanoate. In another embodiment, a dianhydrohexitol diester includes isosorbide diisovalerate, isosorbide divalerate and isosorbide dihexanoate. In yet another embodiment, a dianhydrohexitol diester is isosorbide dihexanoate. Further, mixtures of said dianhydrohexitol diesters may be employed, as well as compositions in which the hydroxyl moieties of the dianhydrohexitols are not fully converted to esters.

In some embodiments, a film promoter composition including dianhydrohexitol diesters can provide film-forming properties resulting in high gloss films while not contributing to reduced film hardness or increased VOCs when added to paints and/or resins. In certain embodiments, a dianhydrohexitol diester for use in a film promoter composition is selected to optimize properties of low volatility, coalescing ability, hardness and gloss.

In some embodiments, the film forming composition includes a water-based film forming polymer and a diester of one or more dianhydrohexitols to reduce the MFFT for the water-based film forming polymer and to assist in the formation of a film on a surface after applying the composition to the surface and allowing it to dry.

In some embodiments, the dianhydrohexitol diester reduces the MFFT of the water-based film forming polymer by: 10° C to 30° C; 10° C to 25° C; 15° C to 25° C; 15 °C to 20° C. In other embodiments, the film forming composition containing the dianhydrohexitol diester produces a film having a 20° gloss value, 60° gloss value, a hardness value and combinations thereof which are comparable to films produced from film forming compositions containing a standard coalescent aid. For the purposes of this application "comparable" means a range of: ± 5 %; ± 10 %; any ± 15 %. For the purposes of this application a standard coalescent aid is Texanol® ester alcohol or Dipropylene glycol n-butyl ether.

In some embodiments, the resulting film has a Sword Hardness value comparable to a film formed from film forming compositions containing a standard coalescent aid.

In some embodiments, dianhydrohexitol diesters are prepared from a dianhydrohexitol and the carboxylic acid or corresponding anhydride or acid chloride. For example, isosorbide dihexanoate may be prepared from isosorbide and hexanoic acid anhydride.

### EXAMPLES

Several isosorbide diesters were prepared from isosorbide and the carboxylic acid or corresponding anhydride or acid chloride, e.g., hexanoic anhydride was used to prepare the isosorbide dihexanoate. The isosorbide diesters were purified by vacuum distillation and shown to be one compound by thin layer chromatographic analysis. Infrared analysis was consistent with the expected structure.

The film promoter compositions were incorporated into the resin (latex) dropwise with stirring. The mixtures were allowed to stand for >12 hours. A 3 mil wet film was cast on a sealed Leneta scrub chart or glass plate at ambient temperature. The film was allowed to dry for 24 hours in a constant temperature/humidity cabinet (25° C @ 50% humidity). Gloss readings were made using a Novo-Gloss™ gloss meter (GARDCO®). The MFFT of the resin/ film promoter composition blends was determined according to ASTM D2354. The volatility of the film promoter composition (VOC) was determined according to ASTM D3960.

Tables 1-5 show the surprising and unexpected result that isosorbide diesters selected from isosorbide dipropionate, isosorbide diisobutyrate, isosorbide diisovalerate, isosorbide divalerate and isosorbide dihexanoate, when included in a film forming composition, reduce the minimum film forming temperature without reducing hardness or gloss while at the same time, significantly lowering the levels of VOCs when compared to a film forming composition containing a standard coalescent aid. The quality of the gloss and hardness are benchmarked against film-forming compositions containing Texanol® ester alcohol or Dipropylene glycol n-butyl ether.

### Example 1: Acrylic Resins

Film promoter compositions were added to Optive® 110, an acrylic latex by BASF. All of the isosorbide diesters evaluated in Optive® 110, except the isosorbide dioctanoate, reduced the MFFT, demonstrating their effectiveness as film promoters, and provided clear, glossy films, indicating compatibility with the film forming polymer. The results shown in Table 1 for Optive® 110 demonstrate that the dihexanoate of isosorbide possesses the optimum film forming properties in terms of volatility (VOC value) and ability to coalesce an acrylic latex as indicated by a reduction in MFFT of the resin and gloss values of 87.7 (60° gloss) and 74.8 (20°C). The films made with isosorbide diisovalerate and isosorbide divalerate exhibited comparable gloss values but the diesters produced higher amounts of VOCs. The isosorbide dipropionate and isosorbide diisobutyrate esters lower the MFFT of the resin and produce films having 20° gloss values of at least 74 but these diesters contribute unacceptable amounts of VOCs for some applications. At 7.7 wt.%, the C₈ esters (isosorbide di(2-ethylhexanoate and isosorbide dioctanoate) lower the MFFT of the resin but give low gloss films, relative to the standard composition. The hazy films produced by these C₈ diesters suggested that these film promoters were not compatible with the resin and bleed to the surface of the film.

The film promoter compositions were also added to Rhoplex™ SG-30, an acrylic latex. Rhoplex™ SG-30 has a MFFT of 16° C. As shown in Table 2, clear glossy films are obtained when the inventive isosorbide diesters are used, indicating their suitability as film promoter compositions. In this formulation, the C₈ diesters provide gloss equal to formulations containing the standard coalescent aid. It shows that these diesters function as film promoters in some acrylic resins but are inferior to the C₆ diesters. The hardness of the films was measured via the Sword Harness Test using a Sheen Hardness Rocker and Leveling table. The C₆ and C₈ diesters produced films having identical hardness values as the films made with the formulation containing the standard coalescent aid. The gloss and hardness values in combination with the VOC levels demonstrate that the C₆ and C₈ diesters function as film promoters by coalescing the polymer phase to form a film, but while remaining in the film, they do not significantly soften it.

**Table 1: BASF Optive® 110**

| **Coalescent** | **Film Forming Standard or Promoter Description** | **% Standard or Promoter on Resin Solids** | **Gloss (60°)** | **Gloss (20°)** | **MFFT (°C)** | **Average VOC (%)*** |
|---|---|---|---|---|---|---|
| **Blank** | n/a | 0.0% | Did not form film. Mud cracking. | | 21.0 | n/a |
| **Texanol®** | Texanol® ester alcohol | 7.7% | 87.8 | 73.5 | 1.5 | 100.00 |
| **3127-92-2** | Isosorbide Dipropionate | 7.7% | 87.3 | 72.1 | 4.1 | 18.32 |
| **3127-84-2** | Isosorbide Diisobutyrate | 7.7% | 87.6 | 74.4 | 5.0 | 20.39 |
| **3146-6-2** | Isosorbide Diisovalerate | 7.7% | 87.7 | 76.1 | 6.7 | 5.63 |
| **3146-9-2** | Isosorbide Divalerate | 7.7% | 87.6 | 74.6 | 3.3 | 1.64 |
| **3127-95-2** | Isosorbide Dihexanoate | 7.7% | 87.7 | 74.8 | 3.0 | 1.29 |
| **3127-83-2** | Isosorbide Di(2-ethylhexanoate) | 7.7% | 64.6 | 36.5 | 7.3 | 0.99 |
| **3146-14-3** | Isosorbide Dioctanoate | 7.7% | 58.1 | 28.6 | n/a | n/a |

| | | | | | | |
|---|---|---|---|---|---|---|
| ***Determined on the neat standard or promoter** | | | | | | |

**Table 2: Rohm and Haas Rhoplex™ SG-30 (Acrylic Resin)**

| **Coalescent** | **Description** | **% Standard or Film Forming Promoter on Resin Solids** | **Film Appearance** | **Sword Hardness (24 hr)** | **Gloss (60°)** | **Gloss (20°)** |
|---|---|---|---|---|---|---|
| **TEXANOL®** | Texanol® ester alcohol | 5.00% | clear | 6 | 87.5 | 67.4 |
| **3127-95-2** | Isosorbide Dihexanoate | 5.00% | clear | 6 | 87.8 | 75.4 |
| **3127-83-2** | Isosorbide Di(2-ethylhexanoate) | 5.00% | clear | 6 | 86.9 | 72.5 |
| **3146-14-3** | Isosorbide Dioctanoate | 5.00% | clear | 6 | 87.0 | 65.8 |

### Example 2: Vinyl Acrylic Resin

Film promoter compositions were added to Synthemul® 40-152, a vinyl acrylic resin by Reichhold. The results in Table 3 demonstrate that the dihexanoate ester of isosorbide, which is a low VOC film promoter composition, provides equivalent gloss compared to the Texanol® standard. The C₈ diesters (di(2-ethylhexanoate) and dioctanoate) provide clear films but show reduced gloss, indicating some reduction in compatibility.

**Table 3: Reichhold Synthemul® 40-152**

| **Coalescent** | **Description** | **% Standard or Film Forming Promoter on Resin Solids** | **Film Appearance** | **Sword Hardness (24 hr)** | **Gloss (60°)** | **(20°)** |
|---|---|---|---|---|---|---|
| **TEXANOL®** | Texanol® ester alcohol | 7.00% | clear | 4 | 84.4 | 62.2 |
| 3127-95-2 | Isosorbide Dihexanoate | 7.00% | clear | 4 | 84.9 | 64.0 |
| 3127-83-2 | Isosorbide Di(2-ethylhexanoate) | 7.00% | clear | 4 | 83.7 | 58.4 |
| 3146-14-3 | Isosorbide Dioctanoate | 7.00% | clear | 4 | 83.8 | 59.7 |

### Example 3: Styrene Acrylic Resin

Film promoter compositions were added to Arolon® 847-W-42, a styrene acrylic resin by Reichhold. As shown in Table 4, the dihexanoate ester of isosorbide, while not equivalent to the formulation containing a standard coalescent aid, allows for the formation of a continuous film as visually observed. In contrast, the C₈ diesters are not compatible with the resin, making it impossible to form a film due to severe "crawling" of the film forming composition on the substrate, i.e., the film forming composition would not wet the substrate.

**Table 4: Reichhold Arolon® 847-W-42**

| **Coalescent** | **Description** | **% Standard or Film Forming Promoter on Resin Solids** | **Film Appearance** | **Gloss (60°)** | **Gloss (20°)** |
|---|---|---|---|---|---|
| **DPnB** | Dipropylene glycol n-butyl ether | 15.00% | clear | 94.8 | 73.6 |
| **3127-95-2** | Isosorbide Dihexanoate | 15.00% | clear, craters | 91.6 | 57.6 |
| **3127-83-2** | Isosorbide Di(2-ethylhexanoate) | 15.00% | did not form film | n/a | n/a |
| **3146-14-3** | Isosorbide Dioctanoate | 15.00% | did not form film | n/a | n/a |

## Claims

1. A film-forming composition comprising a water-based film-forming polymer having a minimum film forming temperature of between 15° C and 60° C and a diester(s) of one or more dianhydrohexitols,
wherein said dianhydrohexitol diester has a volatile organic content of less than 20 wt.%, and
wherein the dianhydrohexitol diester is selected from the group consisting of isosorbide dipropionate; isosorbide diisobutyrate; isosorbide diisovalerate; isosorbide divalerate; and isosorbide dihexanoate.

2. The film-forming composition of claim 1, wherein the dianhydrohexitol diester is selected from the group consisting of: isosorbide diisovalerate; isosorbide divalerate; and isosorbide dihexanoate.

3. The film-forming composition of claim 1, wherein the dianhydrohexitol diester is isosorbide dihexanoate.

4. The film-forming composition according to any of claims 1 to 3, further comprising an additive selected from the group consisting of wetting aids, dispersants, thickeners, defoaming agents, algicides, ultra-violet inhibitors, flow agents, leveling agents, rheology modifiers, freeze thaw stabilizing agents, pH modifiers, flash rust inhibitors, biocides, pigments, fillers and dyes.

5. The film-forming composition according to any of claims 1 to 3 wherein the film-forming composition contains at least about 20 wt. % water.

6. The film-forming composition according to any of claims 1 to 4 wherein the film-forming composition contains at least about 20 wt. % water, at least about 10 wt. % water-based film-forming polymer, and the weight of the dianhydrohexitol diester is about 0.1% to about 50% of the weight of the water-based film-forming polymer.

7. The film-forming composition of claim 6, wherein the weight of the dianhydrohexitol diester is about 0.1% to about 50% of the weight of the water-based film-forming polymer.

8. The film-forming composition according to any of claims 1 to 6, wherein the water-based film-forming polymer is selected from the group consisting of: an acrylic resin, a vinyl acrylic resin, a styrene acrylic resin, a vinyl acetate ethylene resin, alkyd resin, ethylene vinyl acrylate resin and combinations thereof.

9. The film-forming compositions of claim 1, wherein the dianhydrohexitols comprise hydroxyl moieties which are not fully converted to esters.

10. A method comprising the steps of: providing a composition according to any of claims 1 to 8, wherein the minimum film-forming temperature of the water-based film-forming polymer is reduced by 10°C to 30°C; and producing a film on a surface wherein said film has properties selected from the group consisting of: 20° gloss value, 60° gloss value, hardness value and combinations thereof, comparable to a film formed from a water based composition containing a standard coalescent aid which is dipropylene glycol n-butyl ether, wherein comparable means a range of: ± 5 %; ± 10 %; and ± 15 %.

## Patentansprüche

1. Eine filmbildende Zusammensetzung, umfassend ein filmbildendes Polymer auf Wasserbasis mit einer minimalen filmbildenden Temperatur zwischen 15°C und 60°C und (einen) Diester(n) aus einem oder mehreren Dianhydrohexitolen,
wobei der Dianhydrohexitol-diester einen Gehalt von flüchtigen organischen Verbindungen von weniger als 20 Gew.-% aufweist
und
wobei der Dianhydrohexitol-diester ausgewählt ist aus der Gruppe, bestehend aus Isosorbid-dipropionat; Isosorbid-diisobutyrat; Isosorbid-diisovalerat; Isosorbid-divalerat; und Isosorbid-dihexanoat.

2. Die filmbildende Zusammensetzung gemäß Anspruch 1, wobei der Dianhydrohexitol-diester ausgewählt ist aus der Gruppe, bestehend aus: Isosorbid-diisovalerat; Isosorbid-divalerat; und Isosorbid-dihexanoat.

3. Die filmbildende Zusammensetzung gemäß Anspruch 1, wobei der Dianhydrohexitol-diester Isosorbid-dihexanoat ist.

4. Die filmbildende Zusammensetzung gemäß einem der Ansprüche 1 bis 3, ferner umfassend ein Additiv, ausgewählt aus der Gruppe bestehend aus Benetzungsmitteln, Dispergiermitteln, Verdickungsmitteln, Entschäumungsmitteln, Algiziden, Ultraviolett-Inhibitoren, Fließmitteln, Egalisierungsmitteln, Rheologiemodifikatoren, Gefrier-Auftau-Stabilisierungs-Mitteln, pH-Modifikatoren, Flugrostinhibitoren, Bioziden, Pigmenten, Füllmitteln und Farbstoffen.

5. Die filmbildende Zusammensetzung gemäß einem der Ansprüche 1 bis 3, wobei die filmbildende Zusammensetzung mindestens etwa 20 Gew.-% Wasser enthält.

6. Die filmbildende Zusammensetzung gemäß einem der Ansprüche 1 bis 4, wobei die filmbildende Zusammensetzung mindestens etwa 20 Gew.-% Wasser, mindestens etwa 10 Gew.-% eines filmbildenden Polymers auf Wasserbasis enthält und das Gewicht des Dianhydrohexitol-diesters etwa 0,1% bis etwa 50% des Gewichts des filmbildenden Polymers auf Wasserbasis beträgt.

7. Die filmbildende Zusammensetzung gemäß Anspruch 6, wobei das Gewicht des Dianhydrohexitol-diesters etwa 0,1% bis etwa 50% des Gewichts des filmbildenden Polymers auf Wasserbasis beträgt.

8. Die filmbildende Zusammensetzung gemäß einem der Ansprüche 1 bis 6, wobei das filmbildende Polymer auf Wasserbasis ausgewählt ist aus der Gruppe, bestehend aus: einem Acrylharz, einem Vinylacrylharz, einem Styrolacrylharz, einem Vinylacetatethylenharz, Alkydharz, Ethylen-vinyl-acrylatharz und Kombinationen davon.

9. Die filmbildende Zusammensetzung nach Anspruch 1, wobei die Dianhydrohexitole Hydroxyleinheiten umfassen, die nicht vollständig zu Estern umgewandelt sind.

10. Ein Verfahren, umfassend die Schritte: Bereitstellen einer Zusammensetzung gemäß einem der Ansprüche 1 bis 8, wobei die minimale filmbildende Temperatur des filmbildenden Polymers auf Wasserbasis um 10°C bis 30°C verringert wird; und Herstellen eines Films auf einer Oberfläche, wobei der Film Eigenschaften aufweist, die ausgewählt sind aus der Gruppe bestehend aus: 20° Glanzwert, 60° Glanzwert, Härtewert und Kombinationen davon, vergleichbar mit einem Film, der aus einer Zusammensetzung auf Wasserbasis gebildet ist, der ein Standard-Koaleszierhilfsmittel enthält, das Dipropylenglycol-n-butylether ist, wobei vergleichbar ein Bereich von ± 5 %; ± 10 %; und ± 15 % bedeutet.

## Revendications

1. Composition filmogène, comprenant un polymère filmogène à base aqueuse ayant une température de filmification minimale comprise entre 15 °C et 60 °C et un/des diester(s) d'un ou plusieurs dianhydrohexitols,
dans laquelle ledit diester de dianhydrohexitol a une teneur en composés organiques volatils inférieure à 20 % en poids, et
dans laquelle le diester de dianhydrohexitol est choisi dans le groupe consistant en : dipropionate d'isosorbide ; diisobutyrate d'isosorbide ; diisovalérate d'isosorbide ; divalérate d'isosorbide ; et dihexanoate d'isosorbide.

2. Composition filmogène selon la revendication 1, dans laquelle le diester de dianhydrohexitol est choisi dans le groupe consistant en : diisovalérate d'isosorbide ; divalérate d'isosorbide ; et dihexanoate d'isosorbide.

3. Composition filmogène selon la revendication 1, dans laquelle le diester de dianhydrohexitol est le dihexanoate d'isosorbide.

4. Composition filmogène selon l'une quelconque des revendications 1 à 3, comprenant en outre un additif choisi dans le groupe consistant en : agents mouillants, dispersants, épaississants, agents anti-mousse, algicides, inhibiteurs d'ultra-violets, agents d'écoulement, agents de nivellement, modificateurs de rhéologie, agents de stabilisation à la congélation - décongélation, modificateurs du pH, antirouilles, biocides, pigments, agents de charge et colorants.

5. Composition filmogène selon l'une quelconque des revendications 1 à 3, dans laquelle la composition filmogène contient au moins environ 20 % en poids d'eau.

6. Composition filmogène selon l'une quelconque des revendications 1 à 4, dans laquelle la composition filmogène contient au moins environ 20 % en poids d'eau, au moins environ 10 % en poids de polymère filmogène à base aqueuse et le poids du diester de dianhydrohexitol est d'environ 0,1 % à environ 50 % du poids du polymère filmogène à base aqueuse.

7. Composition filmogène selon la revendication 6, dans laquelle le poids du diester de dianhydrohexitol est d'environ 0,1 % à environ 50 % du poids du polymère filmogène à base aqueuse.

8. Composition filmogène selon l'une quelconque des revendications 1 à 6, dans laquelle le polymère filmogène à base aqueuse est choisi dans le groupe consistant en : une résine acrylique, une résine vinyl-acrylique, une résine styrène acrylique, une résine éthylène - acétate de vinyle, une résine alkyde, une résine éthylène - acrylate de vinyle et leurs combinaisons.

9. Compositions filmogènes selon la revendication 1, dans lesquelles les dianhydrohexitols comprennent des motifs hydroxyle qui ne sont pas complètement convertis en esters.

10. Méthode comprenant les étapes consistant à : fournir une composition selon l'une quelconque des revendications 1 à 8, dans laquelle la température de filmification minimale du polymère filmogène à base aqueuse est réduite de 10 °C à 30 °C ; et produire un film sur une surface, dans laquelle ledit film a des propriétés choisies dans le groupe consistant en : une valeur de brillance à 20° ; une valeur de brillance à 60°, une valeur de dureté et leurs combinaisons, comparables à celles d'un film formé à partir d'une composition à base aqueuse contenant un auxiliaire de coalescence standard qui est le dipropylène glycol n-butyléther, dans laquelle le terme « comparable » signifie une plage de : ± 5 % ; ± 10 % ; et ± 15 %.
